# EUROPÄISCHE PATENTSCHRIFT

(11) **EP 1 507 980 B1**
(45) Veröffentlichungstag und Bekanntmachung des Hinweises auf die Patenterteilung: **17.05.2006**
(21) Anmeldenummer: 03720248.8
(22) Anmeldetag: 27.03.2003
(51) Int. Cl.: F15B 13/04, F15B 11/044, F15B 11/024, F15B 11/028, F15B 21/14, F15B 21/10, B21D 28/20, B23D 15/14, B30B 15/00

(54) **HYDRAULISCHE STEUERUNG IN EINEM HYDRAULISCHEN SYSTEM, INSBESONDERE FÜR DEN BETRIEB EINER SCHROTTSCHERE**
HYDRAULIC CONTROL IN A HYDRAULIC SYSTEM, ESPECIALLY FOR THE OPERATION OF SCRAP CUTTERS
COMMANDE HYDRAULIQUE DANS UN SYSTEME HYDRAULIQUE, EN PARTICULIER POUR LE FONCTIONNEMENT D'UNE CISAILLE A FERRAILLE

(30) Priorität: 24.05.2002 DE 10223267
(43) Veröffentlichungstag der Anmeldung: 23.02.2005
(73) Patentinhaber: Metso Lindemann GmbH, 40231 Düsseldorf (DE)
(72) Erfinder: KLOTHER, Andreas, 41564 Kaarst (DE); POST, Karl-Heinz, 41564 Kaarst (DE)
(86) Internationale Anmeldenummer: PCT/DE2003/001022
(87) Internationale Veröffentlichungsnummer: WO 2003/100264

(56) Entgegenhaltungen:
- EP-A- 0 464 305
- EP-A- 1 186 783
- EP-B- 0 765 203
- WO-A-86/00849
- WO-A-97/32136
- CH-A- 543 028
- DE-A- 2 808 091
- DE-A- 2 824 176
- DE-A- 2 909 119
- DE-A- 2 928 777
- DE-A- 3 112 393
- DE-A- 4 312 283
- DE-A- 19 529 134
- US-A- 5 611 259

## Beschreibung

### Anwendungsgebiet der Erfindung

Die Erfindung betrifft ein Verfahren zur hydraulischen Steuerung in einem hydraulischen System für den Betrieb einer Werkzeugmaschine wie Presse zum Bearbeiten, wie Pressen und/oder Scheren von Material beliebiger Art, insbesondere für eine Schere zum Schneiden von Metallschrott als eine sogenannte Schrottschere.

### Stand der Technik

Derartige Werkzeugmaschinen wie Pressen umfassen im wesentlichen
- einen Ständer mit mindestens einem darin geführten und befestigten hydraulischen Zylinder zum Antrieb eines das Material pressenden oder niederhaltenden Stampfers gegen einen Tisch und mindestens einem darin geführten und befestigten zweiten hydraulischen Zylinder zum Antrieb eines das Material endbearbeitenden wie schneidenden Werkzeuges gegen ein feststehendes Werkzeug in besagtem Tisch und
- eine sogenannte hydraulische Steuerung mit Tank, Pumpen, Steuerblöcken, Ventilelementen und Düsen, sowie dem hydraulischen Medium für den taktweisen Betrieb der ersten und zweiten Zylinder.

Bekannterweise sind in der hydraulischen Steuerung Mittel vorgesehen, die mindestens in einem der hydraulischen Zylinder am Ende dessen Arbeitshubes, wie z. B. nach dem trennenden Schneiden von Metallschrott, einen Dämpfungsdruck zur Dämpfung eines sogenannten (Schnitt-)Schlages erzeugen.

Die allgemeine Problematik dieser (Schnitt-)Schläge ist seit langem bekannt und in den Schriften DE 28 08 091 A1, 28 24 176 A1, 29 09 118 A1, 35 34 467 A1, 22 21 290 C3, 29 28 777 C2, 31 12 393 C2 und DE 195 29 134 A1 schon ausführlich dargestellt.

Eine brauchbare und schon benutze Lösung des Problems ist dem Oberbegriff des Hauptanspruchs der EP 0 765 203 B1 zu entnehmen, wobei diese Ausführung durch die kennzeichnenden Merkmale, wie
- der dem Dämpfungsdruck entsprechende Steuerdruck ist durch Zufluss von Steueröl aus dem kolbenseitigen Zylinderraum des Arbeitszylinders über eine Umgehungsleitung in den Steuerraum aufbaubar und
- in der Umgehungsleitung ist ein zum kolbenseitigen Zylinderraum hin sperrendes Rückschlagventil angeordnet
vorteilhaft ergänzt werden soll.

Diese vorbekannte hydraulische Steuerung lässt sich wirkungsmäßig in folgenden Schritten hinsichtlich des für die Dämpfung des (Schnitt-)Schlages relevanten Ablaufes darstellen:
1. Der Zylinder fährt mit dem Messer herunter. Mittels des Druckventils 54 wird ein Gegendruck im Stangenraum 12 des Zylinders erzeugt. Das Ventil 54 wirkt zusammen mit dem Ventil 31 als zweistufiges Druckbegrenzungsventil, wobei das Ventil 31 die Hauptstufe darstellt. Das Ventil 38 wird durch die Feder in Stellung mit Durchfluss P-A gehalten, da der Steuerdruck in 40 zu diesem Zeitpunkt noch gering ist. Der Gegendruck im Stangenraum bei der Abwärtsfahrt ist notwendig, um die am Zylinder hängende Last zu halten. Ohne diesen Gegendruck würde der Zylinder durch das Gewicht der Kolbenstange und der anhängenden Last G durch Gravitationseinflüsse schneller als durch die Pumpenmenge vorgegeben fahren. Dies hätte Unterdruck im Kolbenraum 10 zur Folge, der Probleme mit den Dichtungen des Zylinders verursachen kann.
2. Der Zylinder, bzw. das Messer, setzt auf das Material auf. Der Druck im Kolbenraum 10 steigt an, da der Zylinder vorerst nicht mehr bewegt wird. Die Pumpe fördert weiterhin Öl, das zu einem Druckanstieg im Kolbenraum 10 führt. Dieser Druckanstieg setzt sich über die Steuerleitung 62, das Ventil 58 und die Leitung 40 fort und führt zu einem Schalten des Ventils 38 in Stellung A-T. Demnach wird der Steuerraum des Ventils 31 über die Düse 21 und das Ventil 38 mit dem Tank verbunden, das Ventil 31 öffnet gegen die Feder. Als Folge bricht der vorher benötigte Gegendruck im Ringraum 12 des Zylinders ein. Der Zylinder kann nun die volle gewünschte Kraft, die sich aus Druck mal Kolbenfläche definiert, zum Schneiden des Materials aufbringen. Das Messer schneidet das Material bei Erreichen der Schneidkraft.
3. Das Messer wird durch das als Feder wirkende Ölvolumen im Kolbenraum beschleunigt. Unmittelbar nach dem Schnitt bricht der Druck im Kolbenraum 10 durch Entspannung zusammen. Zeitgleich schaltet das Ventil 38 mangels Steuerdruck in Grundstellung P-A zurück. Der durch den beschleunigten Zylinder entstehende Ölstrom wird teils über die Düse 36 und das Ventil 38 auf den Steuerraum des Ventils 31 geleitet. Der Druck ringraumseitig wird wie im Abschnitt 3.1 über das zweistufige Druckbegrenzungsventil (54/31) nach oben hin begrenzt. Dieser Gegendruck stellt schon eine (Schnitt-)Schlagdämpfung dar.
4. Wie unter 2 ersichtlich, ist vor dem Zeitpunkt des Schnittes der Druck im Kolbenraum 10 hoch und der Druck im Ringraum 12 gegen den Tank entlastet. Da der Druck im Kolbenraum 10 nun höher als im Ringraum 12 ist, strömt über die Leitung 68 und die Düsen 70 und 36 sowie das Rückschlagventil 72 Öl vom Kolbenraum zum Ringraum und damit über das Ventil 31 zum Tank. Dieser Ölstrom multipliziert mit dem anstehenden Druck kann nachteilig eine ungewollte Verlustleistung erzeugen.
   Beim Durchschneiden (wie in 3 beschrieben) bricht der Druck im Kolbenraum 10, zumindest teilweise, zusammen. Da der Druck im Kolbenraum 10 abgenommen hat und im Ringraum durch den beschleunigten Zylinder Druck erzeugt wurde, besteht die Gefahr, dass über die Leitung 68 kein Öl fließen kann. Das Druckgefälle wird dann gegenläufig gegen das Rückschlagventil.
   Die Leitung 68 wird somit auch zu einer gegenseitigen Wirkung anstatt der unterstützenden Dämpfung führen. Ferner ist festzustellen, dass für das Wirksamwerden der gewünschten, (Schnitt-)Schlagdämpfung das Ventil 38 zunächst in Grundstellung schalten muss. Voraussetzung hierfür ist, dass der Druck in der Leitung 40 (somit vorher im Kolbenraum 10) zusammengebrochen sein muss. Es kann also in besonderen Fällen kein Öl über die Leitung 68 und danach über das Ventil 38 fließen, da dies aufgrund der Schaltungslogik bestenfalls zusätzliche Mittel erfordert und das benötigte Öl über die Düse 36 der Vorsteuerung zugeführt wird..

Zusätzlich soll demnach durch den 4. Schritt die an sich schon vorhandene (Schnitt-) Schlagdämpfung mit einfachen Mitteln unterstützt werden, was jedoch nicht ohne weitere Mittel möglich erscheint bzw. zu weiteren Aufwänden führen kann.

Die schon mit den gemäß der erwähnten EP 0 765 203 B1 oberbegrifflich definierten Merkmalen (entsprechend den zuvor dargestellten Schritten 1 bis 3) in der industriellen Praxis realisierten hydraulischen Steuerungen in insbesondere Schrottscheren haben sich hinsichtlich einer (Schnitt-)Schlagdämpfung funktionell bewährt, sie sind jedoch verbesserungsbedürftig im Sinne eines komplexen hydraulischen Problems. Hinsichtlich der Wirksamkeit der technischen Mittel der im 4. Schritt beschriebenen Funktion wäre dieses nur teilweise und dann realisierbar, wenn zusätzliche Mittel eingesetzt würden. Das bedeutet zumindest einen erheblichen Aufwand an Kosten.

Die Ausschau nach Lösungsansätzen wie z.B. bei großen, allerdings kontinuierlich arbeitenden Kanalballenpressen zeigt gemäß DE 43 12 283 A1 eine Steuerung für ein hydraulisches Hochleistungs-Stellglied, welches unter Last aus einer ausgefahrenen Arbeitsstellung in eine Rückbewegung zu steuern ist, wobei ein mit hydraulischem Druck beaufschlagter Arbeitsraum des Stellglieds mit einer Rücklauf-Leitung niedrigen Drucks über ein Wege-Ventil verbunden wird, dessen Ventilstellung hydraulisch über eine Steuerleitung gestellt wird, die zumindest eine Drosselblende aufweist.

Dabei ist zwischen dem Wege-Ventil und der Drosselblende ein druckstabilisierendes Verzögerungsglied eingeschaltet.

Analysiert man die Wirkungsweise dieser Steuerung im Hinblick auf die Maschinen der eingangs genannten Gestaltung, so wird zwar eine Ventilschaltung zur Reduzierung von Entlastungsschlägen vorgestellt und ein gekammerter Druck aus einem System möglichst sanft abgebaut, um Schläge in die Tankleitung zu reduzieren. Jedoch ist der schnelle Aufbau eines Gegendrucks in einem Zylinder und diesen dann auch noch zu begrenzen mit dieser Maßnahme nicht möglich.

Ein Ansatz für die Lösung des vorliegenden Problems ergibt sich aus dieser Offenbarung nicht.

Die Zielstellung, in einem Zylinder der gattungsgemäßen Maschinen, unter Berücksichtigung ihrer spezifischen Wirkungsweise möglichst schnell-einen Gegendruck aufzubauen und zu begrenzen, kann auch nicht die Lösung nach der EP 1 186 783 A1 erfüllen. Hiernach wird lediglich die Verwendung von abfließendem Öl des einen Zylinders zum allgemeinen Druckbeaufschlagen und Antrieb eines zweiten Zylinders benutzt. Diese Wirkung wird als bekannt vorausgesetzt, um bei den hiesigen Maschinen überhaupt die Grundfunktiorien der hydraulischen Steuerung zu erfüllen.

Somit ist festzustellen, dass das Problem der (Schnitt-)Schlagdämpfung mittels hydraulischer Steuerung für eingangs definierte Pressen, insbesondere Scheren zum Schneiden von Metallschrott, bisher nicht komplex im Rahmen des gesamten hydraulischen Systems gelöst wurde.

So stellt das durch die Pumpen zur Verfügung stehende Volumen des hydraulischen Mediums in hydraulischen Steuerungen für Werkzeugmaschinen wie Pressen, insbesondere Scheren zum Schneiden von Metallschrott, eine Begrenzung der Geschwindigkeit der Abläufe von hydraulischen Zylindern dar, weil das zum Tank fließende hydraulische Medium in der Regel ungenutzt bleibt. Hinzukommt, dass senkrecht arbeitende hydraulische Zylinder, wie in besagten Pressen bzw. Scheren, mit anhängenden Massen von z. B. Werkzeugen besondere Anforderungen an eine hydraulische Steuerung stellen. Würde man bei der Abwärtsfahrt dieser Zylinder, wobei das Ausfahren nach unten erfolgt, den Ringraum des Zylinders einfach gegen den Tank entlasten, könnte der Kolben des Zylinders durch die Eigenmasse und die anhängende Last herabfahren und der Wirkung der Pumpen eventuell vorauseilen. Das wirkt sich zumindest auf die Standzeit der Zylinderdichtungen nachteilig aus und kann auch nachteilig für das gesamte hydraulische System sein.

Schließlich wird bei herkömmlichen hydraulischen Steuerungen für oben beschriebene Verwendungen bei der gleichzeitigen Aufwärtsbewegung von zwei Zylindern die Zykluszeit des Bearbeitungsvorganges, wie z. B. nach dem Scheren, erheblich eingeschränkt.

### Darstellung des Wesens der Erfindung

Die Gesamtheit dieser an sich im entsprechenden hydraulischen System zusammenhängenden Probleme, wie
- (Schnitt-)Schlagdämpfung mit einfachen Mitteln und/oder
- Eilgangschaltung mit Lastkompensation und/oder
- Ölübernahme mit Leistungssteigerung
als komplexe hydraulische Steuerung eingangs beschriebener Anwendung liegt der erfindungsgemäßen Aufgabenstellung zugrunde.

Die Erfindung stellt sich die Aufgabe, ein Verfahren zu einer derartigen hydraulischen Steuerung in einem hydraulischen System für den Betrieb einer Werkzeugmaschine wie Presse zum Bearbeiten von Material beliebiger Art, insbesondere für eine Schrottschere zu schaffen, die in funktioneller Verschmelzung der Wirkung zum Teil bekannter Merkmale
- eine (Schnitt-)Schlagdämpfung mit geringem baulichen Aufwand an hydraulischen Mitteln bewirkt, bei der der maximale Gegendruck auf der Ringraumseite des Zylinders höher eingestellt werden kann als in herkömmlichen Lösungen zur Erzeugung eines Gegendruckes,
- eine Eilgangschaltung mit einer Lastkompensation verknüpft und das herkömmlich zum Tank fließende hydraulische Medium nutzt und/oder
- zwecks Senkung der Zykluszeit und Leistungssteigerung der Maschine bei der gleichzeitigen Aufwärtsbewegung von zwei Zylindern das abfließende hydraulische Medium eines der Zylinder zum Antrieb bzw. Bewegen des anderen Zylinders bei gleicher Pumpenfördermenge verwendet.

Erfindungsgemäß wird die Aufgabe durch die Merkmale gemäß den Ansprüchen 1 bis 17 gelöst.

Im Ergebnis wird eine komplexe hydraulische Steuerung im hydraulischen System für den Betrieb von Werkzeugmaschine wie Pressen, insbesondere Schrottscheren, geschaffen, die neben dem gelösten Problem einer baulich einfachen aber funktionell voll wirksamen Schlagdämpfung die Ausstoßquoten des zu bearbeitenden Materials erhöht, ohne die installierte Leistung und den Bauaufwand zu erhöhen, womit dem Betreiber eine Maschine auch mit energetisch höherem Gebrauchswert zur Verfügung gestellt werden kann.

Die Erfindung wird an einem Ausführungsbeispiel gemäß dem Schema der hydraulischen Schaltung für den Betrieb einer Schrottschere anhand der Zeichnungen erläutert.

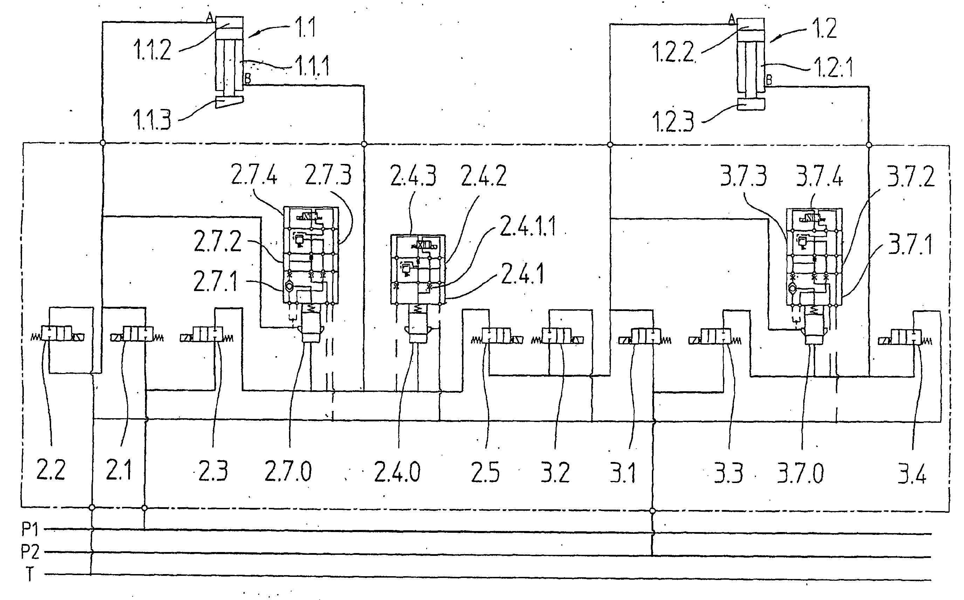

### Kurze Beschreibung der Zeichnung

Die dem erfindungsgemäßen hydraulischen System entsprechende Schaltung ist in der Zeichnung schematisch dargestellt. Darin ist die eigentliche Steuerung mit der Linie _._. umrissen. Mit 1.1 ist ein erster hydraulischer Zylinder für den Antrieb eines Werkzeuges wie Messerschlitten mit dem das Material schneidendem Messer 1.1.3. und mit 1.2 ein zweiter hydraulischer Zylinder für den Antrieb eines weiteren Werkzeuges wie Stampfer 1.2.3. zum Niederhalten des zu schneidenden Materials vereinfacht dargestellt.

### Bester Weg zur Ausführung der Erfindung

Die hydraulischen Zu- bzw. Abgänge für das hydraulische Medium des Bodenraumes 1.1.2, 1.2.2 in beiden Zylindern 1.1 und 1.2 sind mit A und die des Ringraumes 1.1.1, 1.2.1 mit B bezeichnet. T symbolisiert die Leitung zum nicht dargestellten Tank, P1 und P2 erklären die Anschlüsse zu den Druckleitungen und den nicht dargestellten Pumpen.

Die Grundschaltung der hydraulischen Steuerung für den erfindungsgemäßen Betrieb der Schrottschere ist zunächst mit einem zweiten Ventil 2.2 zwischen dem Bodenraum 1.1.2 des ersten hydraulischen Zylinders 1.1 und dem Tank T sowie einem dritten Ventil 2.3 zwischen dem Ringraum 1.1.1 und dem Anschluß zur Druckversorgung P1 vorgegeben.

Weiterhin ist ein fünftes Ventil 3.3 zwischen dem Bodenraum 1.1.2 des zweiten hydraulischen Zylinders 1.2 und dem Anschluß zur Druckversorgung P2 sowie ein sechstes Ventil 3.2 zwischen dem Bodenraum 1.2.2 und dem Tank T vorgesehen.

Schließlich sind noch ein siebentes Ventil 3.3 zwischen dem Ringraum 1.2.1 und dem Anschluss zur Druckversorgung P2 sowie ein achtes Ventil 3.4 zwischen dem Ringraum und dem Tank T anzuordnen.

Die erfindungswesentliche Funktion der hydraulischen Steuerung, die im hydraulischen System entsprechend der Aufgabenstellung wirkt, wird in nachstehenden Teilabschnitten I, II und III näher erläutert.

### I. Der Funktionsteil (Schnitt-)Schlagdämpfung

Bei einer Schrottschere wird der Messerschlitten 1.1.3 mit dem verbundenen Kolben des Zylinders nach dem Scheren des Materials beschleunigt. Ursache ist ein bis kurz vor dem Schnitt hoher Druck im Bodenraum 1.1.2 des Zylinders 1.1. Das komprimierte. Volumen des hydraulischen Mediums wirkt als Energiespeicher. Dieser beschleunigt den Zylinder 1.1 mit Messerschlitten 1.1.3. Vor dem Schnitt bzw. Scheren ist der Ringraum 1.1.1 des Zylinders 1.1 entlastet. Um der Beschleunigung des Messerschlittens 1.1.3 und einem daraus resultierenden hydraulischen Schlags entgegenzuwirken wird im Ringraum 1.1.1 des Zylinders 1.1 ein Gegendruck erzeugt, der geeignet ist den hydraulischen Schlag zu dämpfen.

Zum Zeitpunkt unmittelbar vor dem Durchschneiden des Materials sind als weitere erfindungsgemäße Elemente ein bisher nicht genanntes, erstes Ventil 2.1 zwischen dem Bodenraum 1.1.2 und Tank T sowie noch ein nicht erwähntes Vorsteuerventil 2.4.3 in geschalteter Stellung. Dadurch wird der Bodenraum 1.1.2 über das erste Ventil 2.1 mit dem Anschluss zur Druckversorgung P1 verbunden, die von den nicht dargestellten hydraulischen Pumpen gespeist wird.
Der Ringraum 1.1.1 des ersten hydraulischen Zylinders 1.1 ist über ein erstes Hauptventilelement 2.4.0 mit Deckel 2.4.1 gegen den nicht dargestellten Tank entlastet.

Die nicht dargestellten Antriebsmotoren der Hydraulikpumpen sind durch eine geeignete Leistungsbegrenzung der Pumpen gegen Überlastung gesichert. Diese Leistungsbegrenzung stellt einen geringeren Förderstrom des hydraulischen Mediums bei hohen Drücken ein, so dass das Produkt aus Druck und Volumenstrom, das der hydraulischen Leistung entspricht, nahezu konstant bleibt. Der Volumenstrom des hydraulischen Mediums ist demnach bei hohen Drücken gering gegenüber dem Volumenstrom bei kleinen Drücken. Demzufolge ist die Geschwindigkeit des ersten hydraulischen Zylinders 1.1 bei hohen Drücken auch gegenüber der bei kleinen Drücken geringer.

Der Öffnungshub des ersten Hauptventilelements 2.4.0 wird durch eine integrierte, nicht bezeichnete Feder dem Volumenstrom über das betreffende Ventil angepasst.

Bei einer schlagartig schnellen Bewegung des Kolbens des ersten hydraulischen Zylinders 1.1 (wie oben beschrieben) wird nun durch eine erfindungswesentliche Düse 2.4.1.1 das erste Hauptventilelement 2.4.0 in seiner Öffnungsbewegung verzögert. Gleichzeitig wird der Druck im Ringraum 1.1.1 des Zylinders 1.1 durch das Druckventil 2.4.2 als Vorsteuerung des ersten Hauptventilelements 2.4.0 auf den am Druckventil 2.4.2 eingestellten Druck begrenzt. Die Verzögerung der Öffnung des zweiten Hauptventilelements 2.4.0 ist für die Erzeugung eines begrenzten Gegendruckes und somit für eine (Schnitt-) Schlagdämpfung überraschend ausreichend.

Demzufolge kann der maximale Gegendruck auf der Ringraumseite 1.1.1 des ersten hydraulischen Zylinders 1.1 mit einfachen Mitteln und vorteilhaft höher eingestellt werden als in den vorbekannten Lösungen zur Erzeugung eines Gegendruckes, womit diese Teil-Lösung auch mit geringerem baulichem Aufwand realisierbar wird.

### II. Der Funktionsteil Eilgangsschaltung verknüpft mit Lastkompensation

Das durch die Pumpen zur Verfügung stehende Fördervolumen stellt bisher bei hydraulischen Schrottscheren eine Begrenzung der Zylindergeschwindigkeit dar, wobei nun das konventionell zum Tank fließende hydraulische Medium genutzt werden soll.

Des weiteren sind senkrecht arbeitende hydraulische Zylinder 1.1 und 1.2, mit anhängenden Gewichtslasten der Werkzeuge, wie Messerschlitten 1.1.3 und Stampfer 1.2.3 besonders zu steuern.

Würde man bei der Abwärtsfahrt der Zylinder 1.1 und 1.2, wobei das Ausfahren nach unten erfolgt, den Ringraum 1.1.1 und 1.2.1 einfach gegen den Tank T entlasten, könnte der jeweilige Kolben der hydraulischen Zylinder 1.1 und 1.2 durch das Eigengewicht und die anhängende Last besagter Werkzeuge herabfahren und der Wirkung der hydraulischen Pumpen nachteilig vorauseilen. Dies hätte insbesondere nachteilige Auswirkungen auf die Standzeit der Zylinderdichtungen.

Als Gegenmaßnahme soll aufgabengemäß bei der Abwärtsfahrt im jeweiligen Ringraum 1.1.1, 1.2.1 ein Druck erzeugt werden, der groß genug ist, die hängende Last wie z.B. der Werkzeuge zu kompensieren. In Vorversuchen wurde ermittelt, dass eine Druckdifferenz zwischen Ring- und Bodenraum 1.1.1, 1.1.2 sowie 1.2.1, 1.2.2 der hydraulischen Zylinder 1.1, 1.2 zur Kompensation der Gewichtslast geeignet ist. Gleichzeitig soll das ringraumseitig bei B abfließende hydraulische Medium im Sinne einer üblichen Eilgangschaltung genutzt werden.

Mit Hilfe der zeichnungsgemäßen Schaltung werden beide Anforderungen kombiniert realisiert, indem erfindungsgemäß ein zweites Hauptventilelement 2.7.0 mit Deckel 2.7.1, Zwischenplatte 2.7.2, Druckventil oder Drossel (Düse) 2.7.3 und Wegeventil 2.7.4 sowie analog ein drittes Ventilelement 3.7.0 mit Deckel 3.7.1, Zwischenplatte 3.7.2, Druckventil oder Drossel (Düse) 3.7.3 und Wegeventil 3.7.4 angeordnet sind.

Für Abwärtsbewegungen mit geringer Gegenkraft auf die hydraulischen Zylinder 1.1, 1.2 sind diese Schaltungen besonders vorteilhaft.

Die jeweilige Ventilkombination wirkt zusammen aus dem zweiten und dritten Hauptventilelement 2.7.0, 3.7.0 mit einer Vorsteueranordnung, die durch die Deckel 2.7.1, 3.7.1, Zwischenplatten 2.7.2, 3.7.2, Druckventile oder Drosseln (Düsen) 2.7.3, 3.7.3 und die Wegeventile 2.7.4, 3.7.4 gebildet sind.

Diese Vorsteueranordnung stellt in der zeichnungsgemäßen Verknüpfung in Kombination mit dem jeweiligen Hauptventilelement 2.7.0, 3.7.0 ein schaltbares Druckventil mit Rückschlagfunktion dar, wobei der ringraumseitige Druck gegenüber dem kolbenseitigen der hydraulischen Zylinder 1.1, 1.2 abgestimmt eingestellt werden kann.

Eine alternative Kombination eines separaten Eilgangventils mit Lastkompensationsfunktion könnte aus energetischer Sicht eine optimierte Lösung darstellen.

### III. Der Funktionsteil Übernahme des hydraulischen Mediums

Bei der gleichzeitigen Aufwärtsbewegung von zwei wie oben beschriebenen Zylindern 1.1, 1.2 soll das abströmende hydraulische Medium eines der Zylinder 1.1, 1.2 zum Bewegen des anderen Zylinders 1.1, 1.2 verwendet werden. Die somit gegenüber herkömmlichen Konzepten gewonnene Menge an hydraulischem Medium senkt die Zykluszeit der Presse, insbesondere Schrottschere, bei gleicher Pumpenfördermenge erheblich.

Die erfindungsgemäße Schaltung bewirkt eine Leistungssteigerung gegenüber üblichen Konzepten. Die Schaltung für eine derartige Verwendung des abströmenden hydraulischen Mediums wird erfindungsgemäß durch ein viertes Ventil 2.5 zwischen dem Bodenraum 1.2.2 und Ringraum 1.1.1 realisiert. Bei der dargestellten Schaltung kann der über das abströmende Medium angetriebene Zylinder 1.1, 1.2 zusätzlich mit weiteren Pumpen angetrieben werden.

### Gewerbliche Anwendbarkeit

Die Erfindung ist zwar speziell am hydraulischen System einer Schrottschere erläutert, lässt sich jedoch allgemein für den Betrieb von Werkzeugmaschinen wie Pressen der eingangs genannten Gattung übertragen, bei denen schlechthin das komplexe Problem der Schlagdämpfung, Eilgangschaltung mit Lastenkompensation und/oder Übernahme des hydraulischen Mediums zwischen mindestens zwei hydraulischen Zylindern zu lösen ist.

### Bezugszeichenliste

- 1.1: = erster hydraulischer Zylinder für den Antrieb eines Werkzeuges wie 1.1.3
- 1.1.1: = Ringraum
- 1.1.2: = Bodenraum
- 1.1.3: = Messerschlitten mit Messer

- 1.2: = zweiter hydraulischer Zylinder für den Antrieb eines Werkzeuges wie 1.2.3
- 1.2.1: = Ringraum
- 1.2.2: = Bodenraum
- 1.2.3: = Stampfer zum Niederhalten des Materials

- 2.1: = erstes Ventil zwischen Bodenraum 1.1.2 und P1
- 2.2: = zweites Ventil zwischen Bodenraum 1.1.2 und Tank T
- 2.3: = drittes Ventil zwischen Ringraum 1.1.1 und P1

- 2.4.0: = erstes Hauptventilelement
- 2.4.1: = Deckel
- 2.4.1.1=: Düse
- 2.4.2: = Druckventil
- 2.4.3: = Vorsteuerventil

- 2.5: = viertes Ventil zwischen Bodenraum 1.2.2 und Ringraum 1.1.1

- 2.7.0: = zweites Hauptventilelement
- 2.7.1: = Deckel
- 2.7.2: = Zwischenplatte
- 2.7.3: = Druckventil oder Drossel (Düse)
- 2.7.4: = Wegeventil

- 3.1: = fünftes Ventil zwischen Bodenraum 1.2.2 und P2
- 3.2: = sechstes Ventil zwischen Bodenraum 1.2.2 und Tank T
- 3.3: = siebentes Ventil zwischen Ringraum 1.2.1 und P2
- 3.4: = achtes Ventil zwischen Ringraum 1.2.1 und Tank T
- 3.7.0: = drittes Hauptventilelement
- 3.7.1: = Deckel
- 3.7.2: = Zwischenplatte
- 3.7.3: = Druckventil oder Drossel (Düse)
- 3.7.4: = Wegeventil

- A: = Zugang/Abgang Bodenraum
- B: = Zugang/Abgang Ringraum
- P 1: = Anschluss zur Druckversorgung
- P2: = Anschluss zur Druckversorgung
- T: = Anschluss zum Tank

## Patentansprüche

1. Verfahren zur hydraulischen Steuerung in einem hydraulischen System für den Betrieb einer Werkzeugmaschine wie Presse zum Bearbeiten von Material beliebiger Art, insbesondere für den Betrieb einer Schrottschere mit hydraulischen Mitteln zur höheren Einstellung eines maximalen Gegendrucks auf der Ringraumseite (1.1.1, 1.2.1) eines mindestens ersten Zylinders (1.1, 1.2) als Schlagdämpfung, **dadurch gekennzeichnet, dass** bei einer schlagartig schnellen Bewegung des mindestens ersten Zylinders (1.1) durch eine Düse (2.4.1.1) ein erstes Hauptventilelement (2.4.0) in seiner Bewegung zur Öffnung verzögert, gleichzeitig der Druck im Ringraum (1.1.1) des Zylinders (1.1) durch ein Druckventil (2.4.2) als Vorsteuerung des ersten Hauptventilelements (2.4.0) auf den am Druckventil (2.4.2) eingestellten Druck begrenzt wird und diese Verzögerung der Öffnung des ersten Hauptventilelements (2.4.0) der Erzeugung eines begrenzten Gegendruckes als Schlagdämpfung entspricht, wobei diese Schlagdämpfung durch ein Vorsteuerventil (2.4.3), welches das erste Hauptventilelement (2.4.0) steuert, unterstützt wird.

2. Verfahren zur hydraulischen Steuerung in einem hydraulischen System für den Betrieb einer Werkzeugmaschine wie Presse zum Bearbeiten von Material beliebiger Art, insbesondere für eine Schrottschere, umfassend
- hydraulisches Mittel zur höheren Einstellung eines maximalen Gegendruckes auf der Ringraumseite eines ersten Zylinders als Schlagdämpfung,
- eine Eilgangschaltung mit Lastkompensation, die das herkömmlich zu einem Tank fließende hydraulische Medium nutzt,
- eine Verwendung des abfließenden hydraulischen Mediums mindestens eines der hydraulischen Zylinder (1.1, 1.2) zum Antrieb bzw. Bewegen eines anderen Zylinders (1.1, 1.2) bei gleicher Pumpenfördermenge zur Senkung der Zykluszeit und zur Leistungssteigerung des systems bei gleichzeitiger Aufwärtsbewegung von zwei Zylindern und
- entsprechende hydraulische Mittel wie hydraulisches Medium, Pumpen, Tank, Zylinder, Ventile und Düsen,
**dadurch gekennzeichnet, dass**
a) bei einer schlagartig schnellen Bewegung des ersten Zylinders (1.1) durch eine Düse (2.4.1.1) ein erstes Hauptventilelement (2.4.0) in seiner Bewegung zur Öffnung verzögert, gleichzeitig der Druck im Ringraum (1.1.1) des Zylinders (1.1) durch ein Druckventil (2.4.2) als Vorsteuerung des ersten Hauptventilelements (2.4.0) auf den am Druckventil (2.4.2) eingestellten Druck begrenzt wird und diese Verzögerung der Öffnung des ersten Hauptventilelementes (2.4.0) der Erzeugung eines begrenzten Gegendruckes als Schlagdämpfung entspricht, wobei diese Schlagdämpfung durch ein Vorsteuerventil (2.4.3), welches das erste Hauptventilelement (2.4.0) steuert, unterstützt wird und
b) zur Verknüpfung der Kompensation von Gewichtslasten an einem der Zylinder (1.1, 1.2) mit einer Eilgangschaltung ein zweites Hauptventilelement (2.7.0) in Kombination mit einem Deckel (2.7.1), einer Zwischenplatte (2.7.2), einem Druckventil oder einer Drossel wie Düse (2.7.3) und einem Wegeventil (2.7.4) und ein drittes Hauptventilelement (3.7.0) in Kombination mit einem Deckel (3.7.1), einer Zwischenplatte (3.7.2), einem Druckventil oder einer Drossel wie Düse (3.7.3) und einem Wegeventil (3.7.4) vorgesehen sind und somit der Druck ringraumseitig (1.1.1, 1.2.1) um einen eingestellten Wert höher ist als aufbodenseitig (1.1.2, 1.2.2) und
c) bei einer gleichzeitigen Aufwärtsbewegung des ersten Zylinders (1.1) und zweiten Zylinders (1.2) ein viertes Ventil (2.5) zwischen dem Bodenraum 1.2.2 und dem Ringraum 1.1.1 vorgesehen ist und somit das abströmende hydraulische Medium eines der Zylinder (1.1, 1.2) zum Bewegen des anderen verwendbar ist.

3. Verfahren nach den Ansprüchen 1 oder 2, **dadurch gekennzeichnet, dass** das Vorsteuerventil (2.4.3) elektrisch betätigbar ist.

4. Verfahren nach den Ansprüchen 1 oder 2, **dadurch gekennzeichnet, dass** das Vorsteuerventil (2.4.3) mittels hydraulischer Steuerleitung betätigbar ist.

5. Verfahren nach einem der Ansprüche 1 bis 4, **dadurch gekennzeichnet, dass** zwischen dem Ringraum (1.1.1) und einem hydraulischen Element wie Deckel (2.4.1), Druckventil (2.4.2), Vorsteuerventil (2.4.3) und/oder Zwischenplatte eine Verbindungsleitung vorgesehen ist, in der weitere hydraulische Elemente, wie ein Rückschlagventil, Wegeventil und eine Düse angeordnet sind.

6. Verfahren nach einem der Ansprüche 1 bis 5, **dadurch gekennzeichnet, dass** zwischen dem Bodenraum (1.1.2) und einem hydraulischen Element wie Deckel (2.4.1), Druckventil (2.4.2), Vorsteuerventil (2.4.3) und/oder Zwischenplatte eine Verbindungsleitung vorgesehen ist, in der weitere hydraulische Elemente, wie ein Rückschlagventil, Wegeventil und/oder eine Düse angeordnet sind.

7. Verfahren nach einem der Ansprüche 1 bis 6, **dadurch gekennzeichnet, dass** mindestens ein Druckspeicher vorgesehen ist, der mit mindestens einem der hydraulischen Elemente, wie Deckel (2.4.1), Druckventil (2.4.2), Vorsteuerventil (2.4.3) und/oder Zwischenplatte verbunden ist.

8. Verfahren nach Anspruch 2, **dadurch gekennzeichnet, dass** mittels des zweiten Hauptventilelements (2.7.0) und des dritten Hauptventilelements (3.7.0) und ihrer Druckventile oder Drosseln (2.7.3, 3.7.3) als Vorsteuerung die Druckdifferenz zwischen Ringraum (1.1.1) und Tank (T) einstellbar ist.

9. Verfahren nach einem der Ansprüche 1 bis 8, **dadurch gekennzeichnet, dass** zum Zeitpunkt vor der schlagartig schnellen Bewegung des Zylinders (1.1) ein erstes Ventil (2.1) sowie das Vorsteuerventil (2.4.3) in geschalteter Stellung sind.

10. Verfahren nach einem der Ansprüche 1 bis 9, **dadurch gekennzeichnet, dass** der Bodenraum (1.1.2) des Zylinders (1.1) über das erste Ventil (2.1) mit einem Anschluss (P1) und mit einer von Pumpen gespeisten Druckleitung verbindbar ist.

11. Verfahren nach einem der Ansprüche 1 bis 10, **dadurch gekennzeichnet, dass** der Ringraum (1.1.1) des Zylinders (1.1) über das erste Hauptventilelement (2.4.0) gegen den Tank entlastbar ist.

12. Verfahren nach einem der Ansprüche 1 bis 11, **dadurch gekennzeichnet, dass** der Öffnurigshub des ersten Hauptventilelements (2.4.0) durch eine integrierte Feder dem Volumenstrom des hydraulischen Mediums über das erste Hauptventilelement (2.4.0) anpassbar ist.

13. Verfahren nach einem der Ansprüche 1 bis 12, **dadurch gekennzeichnet, dass** die Deckel, Zwischenplatten, Druckventile oder Drosseln und Wegeventile (2.7.1, 2.7.2, 2.7.3, 2.7.4 sowie 3.7.1, 3.7.2, 3.7.3, 3.7.4)
- eine Vorsteuereinheit bzw. -anordnung darstellen, die als Verknüpfung in Kombination mit dem jeweiligen Hauptventilelement (2.7.0, 3.7.0) ein schaltbares Druckventil mit Rückschlagfunktion bilden und
- eine Einstellung des ringraumseitigen Druckes in einem der Zylinder (1.1, 1.2) gegenüber seinem kolbenseitigen Druck oder des ringraumseitigen Druckes gegenüber dem Tankdruck bewirken.

14. Verfahren nach einem der Ansprüche 1 bis 13, **dadurch gekennzeichnet, dass** ein separates Ventil für den Eilgang mit der Funktion einer Lastkompensation vorgesehen ist.

15. Verfarhen nach einem der Ansprüche 1 bis 14, **dadurch gekennzeichnet, dass** der mit dem abströmendem hydraulischen Medium betriebene Zylinder (1.1, 1.2) zusätzlich mit weiteren Hydraulikpumpen antreibbar ist.

16. Verfahren nach einem der Ansprüche 1 bis 15, **dadurch gekennzeichnet, dass** jeweils ein zweites zwischen Bodenraum (1.1.2) des ersten Zylinders (1.1) und Tank (T), ein drittes zwischen Ringraum (1.1.1) des ersten Zylinders (1.1) und Anschluss zur Druckversorgung (P1), ein fünftes zwischen Bodenraum (1.2.2) des zweiten Zylinders (1.2) und Anschluss zur Druckversorgung (P2), ein sechstes zwischen Bodenraum (1.2.2) des zweiten Zylinders (1.2) und Tank (T), ein siebentes zwischen Ringraum (1.2.1) des zweiten Zylinders (1.2) und Anschluss zur Drickversorgung (P2) sowie ein achtes zwischen Ringraum (1.2.1) des zweiten Zylinders angeordnetes Ventil (2.2, 2.3, 3.1, 3.2, 3.3, 3.4) vorgesehen ist.

17. Verfahren nach einem der Ansprüche 1 bis 15, **gekennzeichnet durch** eine Software zur Steuerung der Funktionen
- Schlagdämpfung
- Eilgangschaltung mit Lastkompensation und
- Verwendung des abfließenden hydraulischen Mediums eines der Zylinder (1.1, 1.2) zum Antrieb des anderen
mittels Ventile (2.1, 2.2, 2.3), erstem Hauptventilelement (2.4), mit Deckel (2.4.1), Düse (2.4.1.1), Druckventil (2.4.2), Vorsteuerventil (2.4.3), Ventil (2.5), zweitem Hauptventilelement (2.7.0) mit Deckel (2.7.1), Zwischenplatte (2.7.2), Druckventil oder Drossel (2.7.3) und Wegeventil (2.7.4) und den Ventilen (3.1, 3.2, 3.3, 3.4).

## Claims

1. A method for hydraulic control in a hydraulic system for the operation of a machine tool such as a press for processing material of any nature, particularly for operating scrap cutters by hydraulic means for a higher setting of a maximum counterpressure on the annulus side (1.1.1, 1.2.1) of at least a first cylinder (1.1, 1.2) as shock damping, **characterised in that** in the event of a sudden, rapid movement of the at least first cylinder (1.1), the opening movement of a first main valve element (2.4.0) is delayed by a nozzle (2.4.1.1), at the same time the pressure in the annulus (1.1.1) of the cylinder (1.1.) is limited to the pressure set at the pressure valve (2.4.2) by a pressure valve (2.4.2) as a precontrol of the first main valve element (2.4.0), and this delay in the opening of the first main valve element (2.4.0) corresponds to the generation of a limited counterpressure as shock damping, wherein this shock damping is supported by a pilot valve (2.4.3) that controls the first main valve element (2.4.0).

2. The method for hydraulic control in a hydraulic system for the operation of a machine tool such as a press for processing material of any nature, particularly for scrap cutters, including
- hydraulic means for a higher setting of a maximum counterpressure on the annulus side of a first cylinder as shock damping,
- a rapid action switch with load compensation, which uses the hydraulic medium conventionally flowing into a tank,
- use of the outflowing hydraulic medium of at least one of the hydraulic cylinders (1.1, 1.2) for driving or moving another cylinder (1.1., 1,2) for the same pump displacement to reduce the cycle time and improve the performance of the system during simultaneous upward movement of two cylinders and
- corresponding hydraulic means such as hydraulic medium, pumps, tank, cylinder, valves and nozzles,
**characterised in that**
a) in the event of a sudden, rapid movement of the at least first cylinder (1.1), the opening movement of a first main valve element (2.4.0) is delayed by a nozzle (2.4.1.1), at the same time the pressure in the annulus (1.1.1) of the cylinder (1.1.) is limited to the pressure set at the pressure valve (2.4.2) by a pressure valve (2.4.2) as a precontrol of the first main valve element (2.4.0), and this delay in the opening of the first main valve element (2.4.0) corresponds to the generation of a limited counterpressure as shock damping, wherein this shock damping is supported by a pilot valve (2.4.3) that controls the first main valve element (2.4.0) and in the event of a sudden, rapid movement of the at least first cylinder (1.1), the opening movement of a first main valve element (2.4.0) is delayed by a nozzle (2.4.1.1), at the same time the pressure in the annulus (1.1.1) of the cylinder (1.1.) is limited to the pressure set at the pressure valve (2.4.2) by a pressure valve
b) in order to link the compensation of weight loads on one of the cylinders (1.1, 1.2) to a rapid switch, a second main valve element (2.7.0) is provided in combination with a cover (2.7.1), a distance plate (2.7.2), a pressure valve or choke such as a nozzle (2.7.3) and a distributing valve (2.7.4), and a third main valve element (3.7.0) is provided in combination with a cover (3.7.1), a distance plate (3.7.2), a pressure valve or choke such as a nozzle (3.7.3) and a distributing valve (3.7.4), (2.4.3), and the pressure on the annulus side (1.1.1, 1.2.1) is thus higher than the pressure on the base side (1.1.2, 1.2.2) by a set value and
c) a fourth valve (2.5) is provided between the base gap 1.2.2 and the annulus 1.1.1 for the period when both the first cylinder (1.1) and the second cylinder (1.2) move upwards simultaneously, so that the hydraulic medium flowing out of one of the cylinders (1.1, 1.2) us usable is usable for moving the other.

3. The method according to either of claims 1 or 2, **characterised in that** the pilot valve (2.4.3) is actuatable by electrical means.

4. The method according to either of claims 1 or 2, **characterised in that** the pilot valve (2.4.3) is actuatable by a hydraulic control conduit.

5. The method according to any of claims 1 to 4, **characterised in that** a communicating conduit is provided between the annulus (1.1.1) and a hydraulic element such as the cover (2.4.1), the pressure valve (2.4.2), the pilot valve (2.4.3) and/or distance plate, in which additional hydraulic elements, such as a check valve, distributing valve and a nozzle are arranged.

6. The method according to any of claims 1 to 5, **characterised in that** a communicating conduit is provided between the base gap (1.1.2) and a hydraulic element such as the cover (2.4.1), pressure valve (2.4.2), pilot valve (2.4.3) and/or distance plate, in which additional hydraulic elements, such as a check valve, distributing valve and/or a nozzle are arranged.

7. The method according to any of claims 1 to 6, **characterised in that** at least one accumulator is provided, which is connected to at least one of the hydraulic elements such as cover (2.4.1), pressure valve (2.4.2), pilot valve (2.4.3) and/or distance plate.

8. The method according to claim 2, **characterised in that** the pressure differential between annulus (1.1.1) and tank (T) is adjustable as a precontroller via the second main valve element (2.7.0) and the third main valve element (3.7.0) and the pressure valves or chokes (2.7.3, 3.7.3) thereof.

9. The method according to any of claims 1 to 8, **characterised in that** a first valve (2.1) and the pilot valve (2.4.3) are in the switched position at the time of the sudden rapid movement of the cylinder (1.1).

10. The method according to any of claims 1 to 9, **characterised in that** the base gap (1.1.2) of the cylinder (1.1) can communicate with a connection (P1) and a pump-powered pressure pipe via the first valve (2.1).

11. The method according to any of claims 1 to 10, **characterised in that** the annulus (1.1.1) of the cylinder (1.1) can be discharged towards the tank via the first main valve element (2.4.0).

12. The method according to any of claims 1 to 11, **characterised in that** the opening stroke of the first valve element (2.4.0) is adaptable with an integral spring to the volume flow of the hydraulic medium via the first main valve element (2.4.0).

13. The method according to any of claims 1 to 12, **characterised in that** the covers, distance plates, pressure valves or chokes and distributing valves (2.7.1, 2.7.2, 2.7.3, 2.7.4 and 3.7.1, 3.7.2, 3.7.3, 3.7.4)
- make up a precontrol unit or mechanism, which as a link in conjunction with the respective main valve element (2.7.0, 3.7.0) form a switchable pressure valve with return function, and
- effect an adjustment of the pressure on the annulus side in one of the cylinders (1.1, 1.2) with respect to the pressure thereof on the piston side, or of the pressure on the annulus side with respect to the tank pressure.

14. The method according to any of claims 1 to 13, **characterised in that** a separate valve having the function of load compensation is provided for rapid motion.

15. The method according to any of claims 1 to 14, **characterised in that** the cylinder (1.1., 1.2), which is operated with the outflowing hydraulic medium, is also operable with additional hydraulic pumps.

16. The method according to any of claims 1 to 15, **characterised in that** a second, a third, a fifth, a sixth, a seventh, and an eighth valve (2.2, 2.3, 3.1, 3.2, 3.3, 3.4) are provided, arranged respectively between the base gap (1.1.2) of the first cylinder (1.1) and the tank (T), between the annulus (1.1.1) of the first cylinder (1.1) and the connector for pressure supply (P1), between the base gap (1.2.2) of the second cylinder (1.2) and the connector for pressure supply (P2), between the base gap (1.2.2) of the second cylinder (1.2) and the tank (T), between the annulus (1.2.1) of the second cylinder and the connector for pressure supply (P2), and between the annulus (1.2.1) of the second cylinder and the tank (T).

17. The method according to any of claims 1 to 15, **characterised by** software for controlling the functions of
- shock damping
- rapid switching with load compensation and
- use of the hydraulic medium flowing out of one of the cylinders (1.1, 1.2) to drive the other
via valves (2.1, 2.2, 2.3), first main valve element (2.4) with cover (2.4.1), nozzle (2.4.1.1), pressure valve (2.4.2), pilot valve (2.4.3), valve (2.5), second main valve element (2.7.0) with cover (2.7.1), distance plate (2.7.2), pressure valve or choke (2.7.3) and distributing valve (2.7.4), and valves (3.1, 3.2, 3.3, 3.4).

## Revendications

1. Procédé de commande hydraulique dans un système hydraulique pour le fonctionnement d'une machine-outil comme une presse pour le façonnage de divers types de matériaux, notamment pour le fonctionnement d'une cisaille à ferraille avec des moyens hydrauliques afin de régler à un niveau plus élevé une contre-pression maximale sur le côté de l'espace annulaire (1.1.1, 1.2.1) d'au moins un premier cylindre (1.1,1.2) comme mesure d'amortissement des chocs, **caractérisé en ce que** lors d'un mouvement rapide par à-coups d'au moins le premier cylindre (1.1) à travers une tuyère (2.4.1.1), un premier élément de soupape principale (2.4.0) décélère dans son mouvement d'ouverture, la pression dans l'espace annulaire (1.1.1) du cylindre est conjointement limitée par un clapet de refoulement (2.4.2) pilotant le premier élément de soupape principal (2.4.0) à la pression réglée au niveau du clapet de refoulement (2.4.2) et cette décélération de l'ouverture du premier élément de soupape principale (2.4.0) correspond à la production d'une contre-pression limitée comme mesure d'amortissement des chocs, moyennant quoi cet amortissement des chocs est assisté par une vanne de pilotage (2.4.3), laquelle commande le premier élément de soupape principale (2.4.0).

2. Procédé de commande hydraulique dans un système hydraulique pour le fonctionnement d'une machine-outil comme une presse pour le façonnage de divers types de matériaux, notamment d'une cisaille à ferraille, comprenant
- des moyens hydrauliques pour régler à un niveau plus élevé une contre-pression maximale sur le côté de l'espace annulaire d'un premier cylindre comme mesure d'amortissement des chocs,
- une commande de déplacement rapide avec compensation de charge, qui utilise traditionnellement le milieu hydraulique s'écoulant vers un réservoir,
- une utilisation du milieu hydraulique découlant d'au moins un des cylindres hydrauliques (1.1,1.2) afin d'entraîner, respectivement mouvoir un autre cylindre (1.1,1.2) en présence d'une quantité pompée similaire afin de diminuer le temps de cycle et d'augmenter le rendement du système lors d'un mouvement conjoint vers le haut de deux cylindres et
- des moyens hydrauliques correspondants comme un milieu hydraulique, des pompes, un réservoir, des cylindres, des soupapes et des tuyères,
**caractérisé en ce que**
a) lors d'un mouvement rapide par à-coups du premier cylindre (1.1) à travers une tuyère (2.4.1.1), un premier élément de soupape principale (2.4.0) décélère dans son mouvement d'ouverture, la pression dans l'espace annulaire (1.1.1) du cylindre (1.1) est conjointement limitée par un clapet de refoulement (2.4.2) pilotant le premier élément de soupape principale (2.4.0) à la pression réglée au niveau du clapet de refoulement (2.4.2) et cette décélération de l'ouverture du premier élément de soupape principal (2.4.0) correspond à la production d'une contre-pression limitée comme mesure d'amortissement des chocs, moyennant quoi cet amortissement des chocs est assisté par une vanne de pilotage (2.4.3), laquelle commande le premier élément de soupape principale (2.4.0) et
b) afin de coordonner la compensation des charges de masse qui s'exercent sur un des cylindres (1.1,1.2) avec une commande de déplacement rapide, un deuxième élément de soupape principal (2.7.0) est prévu en combinaison avec un capot (2.7.1), une plaque intermédiaire (2.7.2), un clapet de refoulement ou un étranglement comme une tuyère (2.7.3) et un distributeur (2.7.4) et un troisième élément de soupape principal (3.7.0) est prévu en combinaison avec un capot (3.7.1), une plaque intermédiaire (3.7.2), un clapet de refoulement ou un étranglement comme une tuyère (3.7.3) et un distributeur (3.7.4) et la pression du côté de l'espace annulaire (1.1.1,1.2.1) est ainsi réglée à une valeur plus élevée que du côté de la base (1.1.2,1.2.2) et
c) lors d'un mouvement vers le haut conjoint du premier cylindre (1.1) et du deuxième cylindre (1.2), une quatrième soupape (2.5) est prévue entre l'espace de base 1.2.2 et l'espace annulaire 1.1.1 et le milieu hydraulique découlant d'un des cylindres (1.1,1.2) peut ainsi être utilisé pour mouvoir l'autre cylindre.

3. Procédé selon les revendications 1 ou 2, **caractérisé en ce que** la vanne de pilotage (2.4.3) peut être actionnée électriquement.

4. Procédé selon les revendications 1 ou 2, **caractérisé en ce que** la vanne de pilotage (2.4.3) peut être actionnée au moyen d'une conduite de pilotage hydraulique.

5. Procédé selon une des revendications 1 à 4, **caractérisé en ce que** entre l'espace annulaire (1.1.1) et un élément hydraulique comme un capot (2.4.1), un clapet de refoulement (2.4.2), une vanne de pilotage (2.4.3) et/ou une plaque intermédiaire, une conduite de raccordement est prévue, dans laquelle des éléments hydrauliques supplémentaires, comme une soupape anti-retour, un distributeur et une tuyère sont disposés.

6. Procédé selon une des revendications 1 à 5, **caractérisé en ce que** entre l'espace annulaire (1.1.1) et un élément hydraulique comme un capot (2.4.1), un clapet de refoulement (2.4.2), une vanne de pilotage (2.4.3) et/ou une plaque intermédiaire, une conduite de raccordement est prévue, dans laquelle des éléments hydrauliques supplémentaires, comme une soupape anti-retour, un distributeur et/ou une tuyère sont disposés.

7. Procédé selon une des revendications 1 à 6, **caractérisé en ce que** au moins un accumulateur de pression est prévu, lequel est relié à au moins un des éléments hydrauliques, comme un capot (2.4.1), un clapet de refoulement (2.4.2), une vanne de pilotage (2.4.3) et/ou une plaque intermédiaire.

8. Procédé selon la revendication 2, **caractérisé en ce que**, au moyen du deuxième élément de soupape principal (2.7.0) et du troisième élément de soupape principale (3.7.0) et de leurs clapets de refoulement ou étranglements (2.7.3,3.7.3), la différence de pression entre l'espace annulaire (1.1.1) et le réservoir (T) peut être réglée comme mesure de pilotage.

9. Procédé selon une des revendications 1 à 8, **caractérisé en ce que** au moment du mouvement rapide par à-coups du cylindre (1.1), une première soupape (2.1) ainsi que la vanne de pilotage (2.4.3) sont à la position ouverte.

10. Procédé selon une des revendications 1 à 9, **caractérisé en ce que** l'espace de base (1.1.2) du cylindre (1.1) est relié par la première soupape (2.1) à un raccordement (P1) et à une conduite de refoulement alimentée par des pompes.

11. Procédé selon une des revendications 1 à 10, **caractérisé en ce que** l'espace annulaire (1.1.1) du cylindre (1.1) est déchargé dans le réservoir par l'intermédiaire du premier élément de soupape principal (2.4.0).

12. Procédé selon une des revendications 1 à 11, **caractérisé en ce que** la course d'ouverture du premier élément de soupape principale (2.4.0) peut être adaptée, par un ressort intégré, au courant volumique du milieu hydraulique par l'intermédiaire du premier élément de soupape principal (2.4.0).

13. Procédé selon une des revendications 1 à 12, **caractérisé en ce que** les capots, plaques intermédiaires, clapets de refoulement ou étranglements et distributeurs (2.7.1,2.7.2,2.7.3,2.7.4 ainsi que 3.7.1,3.7.2,3.7.3,3.7.4)
- constituent une unité, respectivement un dispositif de pilotage, qui forment en combinaison avec l'élément de soupape principale respectif (2.7.0,3.7.0) un clapet de refoulement commutable avec fonction anti-retour et
- provoquent un réglage de la pression du côté de l'espace annulaire dans un des cylindres (1.1,1.2) par rapport à sa pression du côté du piston ou de la pression du côté de l'espace annulaire par rapport à la pression du réservoir.

14. Procédé selon une des revendications 1 à 13, **caractérisé en ce que** une soupape séparée est prévue pour le déplacement rapide avec la fonction d'une compensation de charge.

15. Procédé selon une des revendications 1 à 14, **caractérisé en ce que** le cylindre (1.1,1.2) mis en service par le milieu hydraulique découlant est en outre entraîné par des pompes hydrauliques supplémentaires.

16. Procédé selon une des revendications 1 à 15, **caractérisé en ce que** respectivement une deuxième soupape (2.2) disposée entre l'espace de base (1.1.2) du premier cylindre (1.1) et le réservoir (T), une troisième soupape (2.3) disposée entre l'espace annulaire (1.1.1) du premier cylindre et le raccordement d'alimentation en pression (P1), une cinquième soupape (3.1) disposée entre l'espace de base (1.2.2) du deuxième cylindre (1.2) et le raccordement d'alimentation en pression (P2), une sixième soupape (3.2) disposée entre l'espace de base (1.2.2) du deuxième cylindre (1.2) et le réservoir (T), une septième soupape (3.3) disposée entre l'espace annulaire (1.2.1) du deuxième cylindre (1.2) et le raccordement d'alimentation en pression (P2) ainsi qu'une huitième soupape (3.4) disposée entre l'espace annulaire (1.2.1) du deuxième cylindre et le réservoir (T) sont prévues.

17. Procédé selon une des revendications 1 à 15, **caractérisé par** un logiciel de commande des fonctions
- d'amortissement des chocs
- de commande de déplacement rapide avec compensation de charge et
- d'utilisation du milieu hydraulique découlant d'un des cylindres (1.1,1.2) pour entraîner l'autre cylindre
au moyen des soupapes (2.1,2.2,2.3), d'un premier élément de soupape principal (2.4) comportant un capot (2.4.1), une tuyère (2.4.1.1), un clapet de refoulement (2.4.2), une vanne de pilotage (2.4.3), une soupape (2.5), un deuxième élément de soupape principal (2.7.0) comportant un capot (2.7.1), une plaque intermédiaire (2.7.2), un clapet de refoulement ou un étranglement (2.7.3) et un distributeur (2.7.4) et les soupapes (3.1,3.2,3.3,3.4).
